(19) Europäisches Patentamt
European Patent Office
Office européen des brevets

(11) EP 3 236 568 A1

(12) EUROPÄISCHE PATENTANMELDUNG

(43) Veröffentlichungstag:
25.10.2017 Patentblatt 2017/43

(51) Int Cl.:
*H02M 1/12* (2006.01)

(21) Anmeldenummer: 16166228.3

(22) Anmeldetag: 20.04.2016

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: Siemens Aktiengesellschaft
80333 München (DE)

(72) Erfinder:
• Benesch, Norbert
90562 Heroldsberg (DE)
• Weis, Benno
91334 Hemhofen (DE)

(54) **VERFAHREN ZUM BETRIEB EINES WECHSELRICHTERSYSTEMS UND NACH DEM VERFAHREN ARBEITENDES WECHSELRICHTERSYSTEM**

(57)    Die Erfindung ist Verfahren zum Betrieb eines Wechselrichtersystems (12) und ein korrespondierendes Wechselrichtersystem (12), welches einen Wechselrichter (10), einen Netzfilter (20) und einen Rückführzweig (30) vom Netzfilter (20) zum Wechselrichter (10) umfasst, wobei mittels einer Dateneinheit (22) Werte bestimmt werden, wobei mittels einer Auswertungseinheit (24) ein Betragsspektrum der erfassten Messwerte ermittelt wird, wobei mittels einer Bewertungseinheit (26) das Betragsspektrum mit einem vorgegebenen oder vorgebbaren Grenzspektrum verglichen wird und wobei mittels einer der Dateneinheit (22), der Auswertungseinheit (24) und der Bewertungseinheit (26) im Rückführzweig (30) nachfolgenden Anpassungseinheit (28) in Abhängigkeit vom Ergebnis des Vergleichs eine Schaltfrequenz des Wechselrichters (10) anpassbar ist und im Betrieb angepasst wird.

FIG 3

## Beschreibung

Die Erfindung betrifft ein Verfahren zum Betrieb eines Wechselrichtersystems sowie ein nach dem Verfahren arbeitendes Wechselrichtersystem. Als Wechselrichtersystem wird dabei ein Netzwechselrichter zusammen mit einem netzseitig vorgeschalteten Netzfilter aufgefasst.

Aktive Netzwechselrichter dienen typischerweise zum Energieaustausch zwischen einem jeweiligen AC-Netz und einem DC-Zwischenkreis. Sie sind daher von großer Bedeutung sowohl für Antriebssysteme, wobei Motor-Wechselrichter die geregelte DC-Spannung als Eingang nutzen, als auch zunehmend für die Energieerzeugung und Energiespeicherung, zum Beispiel mit einer Batterie im DC-Zwischenkreis.

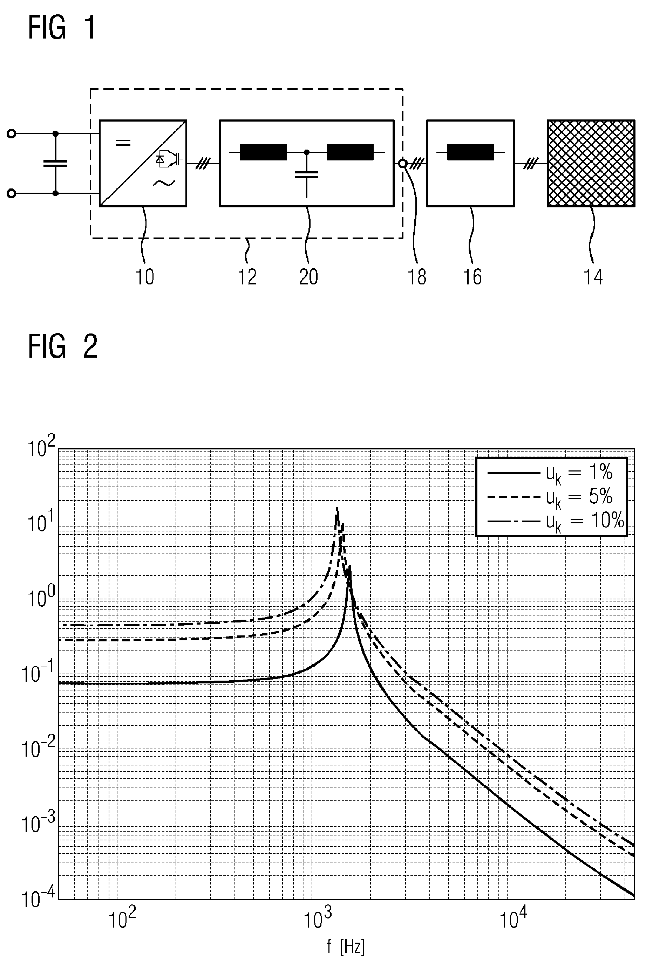

Kennzeichnend für aktive Netzwechselrichter (FIG 1) ist die Fähigkeit zum Wirkleistungsaustausch in beide Richtungen, also vom Netz in den Zwischenkreis zur Versorgung eines Antriebs als auch umgekehrt, um zum Beispiel Bremsenergie oder gespeicherte Energie oder mit PV-Modulen erzeugte Energie in das Netz zu speisen. Zusätzlich kann auch kapazitive oder induktive Blindleistung abgegeben werden.

Wie bei motorseitigen Wechselrichtern erfolgt dies nach dem Stand der Technik mit schaltenden Halbleiter-Bauelementen, zum Beispiel IGBTs in B6-Brückenschaltung. Durch schnelles Schalten zwischen zwei oder mehr Spannungsstufen kann damit über eine Schalt- oder Pulsperiode im Mittel ein näherungsweise kontinuierlicher Verlauf der AC-Ausgangsspannung erzeugt werden. Je nach verwendeter Technik und Ausgangsleistung liegen die Schalt- / Pulsfrequenzen (aus Konsistenzgründen wird im Folgenden durchgängig von Schaltfrequenz oder Schaltfrequenzen gesprochen) zwischen einigen 100 Hz bis zu einigen 100 kHz, typisch sind 2 kHz bis 20 kHz.

Die AC-Ausgangsspannung eines Pulswechselrichters enthält damit neben der Grundschwingung (Netzfrequenz) und niederfrequenten Netzharmonischen auch Anteile bei der Schaltfrequenz (mit Seitenbändern) und deren Vielfachen. Neben der erwünschten Grundschwingung können die niederfrequenten Netzharmonischen durch eine Regelung des Wechselrichters ausgeregelt oder zumindest reduziert werden. Die unerwünschten Frequenzanteile, die durch das Schalten der Leistungshalbleiter hervorgerufen werden, müssen hingegen durch geeignete schaltungstechnische Maßnahmen, üblicherweise in Form von Netzfiltern, so weit reduziert werden, dass die jeweils gültigen Anschlussnormen am Anschlusspunkt (Point of Common Coupling - PCC) eingehalten werden und andere Geräte im Netz nicht gestört werden.

Die Darstellung in FIG 2 zeigt beispielhaft den Frequenzgang eines derartigen Netzfilters anhand der Übertragungsfunktion zwischen Wechselrichter-Ausgangsspannung und resultierender Spannung am PCC. Oberhalb der (eigentlich unerwünschten) Resonanzstelle wird mit zunehmender Frequenz eine bessere Reduzierung der schaltfrequenten Spannungsstörungen erreicht. Für die Auslegung des Gesamtsystems ist man bestrebt, ein Optimum aus gegensätzlichen Anforderungen zu erreichen:

Zum einen sollten die Induktivitätswerte im Filter möglichst klein sein, um Kosten und Baugröße zu minimieren. Allerdings verschiebt sich damit die Resonanzstelle zu höheren Frequenzen und die Wirkung bei einer bestimmten Schaltfrequenz (oberhalb der Resonanz) nimmt ab.

Zum anderen sollte die Schaltfrequenz möglichst gering sein, um die Schaltverluste im Wechselrichter klein und den Wirkungsgrad hoch zu halten. Eine Verringerung der Schaltfrequenz führt jedoch (bei gegebenem Filter) wiederum zu einer geringeren Filterwirkung und damit zu erhöhten schaltfrequenten Anteilen in der PCC-Spannung.

Der Systementwickler hat daher die Aufgabe, einen möglichst optimalen Kompromiss aus Filteraufwand und Schaltfrequenz zu finden. Zu berücksichtigen ist dabei, dass die Filterwirkung auch stark von der Netzinduktivität abhängt. Sollen bestimmte Grenzwerte für die schaltfrequenten Störspannungen eingehalten werden, so müssen Annahmen bezüglich der zu erwartenden Netzinduktivität getroffen werden und die Auslegung des Systems muss für einen Worst-Case-Fall erfolgen.

Für den Zusammenhang zwischen Netzinduktivität $L_N$ und relativer Kurzschlussspannung $u_K$ gilt

$$u_K = \frac{2\pi \, f_{Netz} \, L_N \, S_{KS}}{U_{Netz}^2}$$

mit der Kurzschlussleistung $S_{KS}$ des Netzes. Bei der in FIG 2 beispielhaft gezeigten Situation gilt damit vereinfacht näherungsweise, dass der Filter für den Fall mit $u_K$=1% ca. um den Faktor 5 zu groß dimensioniert werden muss, damit auch bei $u_K$=10% ein bestimmter Grenzwert für die schaltfrequenten Störspannungen eingehalten werden kann.

Falls die Eigenschaften des Netzes im Vorfeld bekannt und näherungsweise konstant sind, so könnte der Filter und/oder das System kostenoptimal angepasst werden. In der Regel liegt dieses Wissen jedoch nicht vor und darüber hinaus können die Netzparameter mit der Zeit stark variieren. Man muss das System also mit eventuell nicht benötigter Dämpfung ausstatten und entsprechende Bauteilkosten und/oder unnötige Schaltverluste in Kauf nehmen.

Davon ausgehend besteht eine Aufgabe der vorliegenden Erfindung darin, ein Verfahren zum Betrieb eines Wechselrichtersystems anzugeben, mittels dessen das Wechselrichtersystem stets in einem optimalen Betriebspunkt betrieben wird, so dass Bauteilkosten minimiert oder zumindest reduziert und der Wirkungsgrad maximiert oder zumindest erhöht wird.

Zur Lösung dieser Aufgabe werden erfindungsgemäß eine Erweiterung des Wechselrichtersystems und ein Verfahren zu dessen Betrieb vorgeschlagen.

Die Erweiterung des Wechselrichtersystems besteht darin, dass zumindest die Spannung am Netzanschlusspunkt gemessen wird oder vergleichbare Werte bestimmt werden, insbesondere numerisch ermittelt werden, und aufgrund einer automatisierten Bewertung entsprechender Messwerte bzw. Werte eine automatische Anpassung der Schaltfrequenz erfolgt. Die Schaltfrequenz wird fortlaufend so gewählt, dass alle in der jeweiligen Applikation gültigen Grenzwerte für den schaltfrequenten Anteil der Ausgangsspannung eingehalten werden. Optional wird die Schaltfrequenz dabei fortlaufend so gewählt, dass sich eine möglichst geringe Schaltfrequenz ergibt, um die Schaltverluste im Wechselrichter klein und den Wirkungsgrad hoch zu halten.

Die Erfindung ist damit ein Verfahren zum Betrieb eines Wechselrichtersystems mit den Merkmalen des Anspruchs 1, wobei das Wechselrichtersystem einen Wechselrichter, einen Netzfilter und zur automatischen Anpassung der Schaltfrequenz einen im Folgenden auch als Rückführzweig bezeichneten Signalpfad vom Netzfilter zum Wechselrichter umfasst. Im Rückführzweig folgen einzelne Funktionseinheiten signaltechnisch aufeinander, nämlich eine Dateneinheit oder eine als Dateneinheit / Datenerfassungseinheit fungierende Messeinheit, eine Auswertungseinheit, eine Bewertungseinheit und eine Anpassungseinheit. Mittels der Dateneinheit werden Werte bzw. Messwerte an einem netzseitigen Anschlusspunkt des Wechselrichters bestimmt bzw. erfasst, insbesondere Messwerte, zum Beispiel Spannungsmesswerte, bezüglich einer aktuellen Störaussendung des Wechselrichters. Mittels einer als Datenerfassungseinheit fungierenden Messeinheit werden die jeweiligen Werte als Messwerte direkt erfasst. Mittels einer Dateneinheit in allgemeiner Form können Werte, wie sie grundsätzlich mittels einer Messeinheit erfassbar sind, auch numerisch ermittelt werden. Solche numerisch ermittelten Werte sind sensorisch erfassten Messwerten gleichwertig und werden im Folgenden zur Vermeidung von sich wiederholenden Formulierungen wie "Werte bzw. Messwerte" ebenfalls kurz als Messwerte bezeichnet. Mittels der Auswertungseinheit wird ein Betragsspektrum der erfassten Messwerte ermittelt / berechnet. Mittels der Bewertungseinheit wird das Betragsspektrum mit einem vorgegebenen oder vorgebbaren Grenzspektrum verglichen und mittels der den Rückführzweig abschließenden und dem Wechselrichter zugeordneten Anpassungseinheit wird in Abhängigkeit vom Ergebnis des Vergleichs eine Schaltfrequenz des Wechselrichters angepasst.

Die Erfindung ist ebenso ein Wechselrichtersystem mit Mitteln zur Ausführung des Verfahrens sowie ggf. einzelner im Folgenden beschriebener Ausführungsformen des Verfahrens, insbesondere ein Wechselrichtersystem mit den Merkmalen des parallelen unabhängigen Vorrichtungsanspruchs. Ein Frequenzgang des Netzfilters des Wechselrichtersystems ist dabei so ausgelegt, dass ein genügend großer Arbeitsbereich mit monoton zunehmender Dämpfung resultiert.

Die Bestimmung / Erfassung der Messwerte am netzseitigen Anschlusspunkt PCC kann während des Betriebs des Wechselrichters erfolgen. Dann wird mittels der jeweiligen Messwerte auch die aktuelle Störaussendung des Wechselrichters erfasst. Die Bestimmung / Erfassung kann zum Beispiel auch bei Pulssperre des Wechselrichters erfolgen und entsprechend kann die Anpassung der Schaltfrequenz zeitlich unabhängig von der Bestimmung / Erfassung erfolgen. Die angepasste Schaltfrequenz wird dann nach einer Pulsfreigabe für den Wechselrichter als anfängliche Schaltfrequenz verwendet und die angepasste Schaltfrequenz geht zum Beispiel von einer für die jeweilige Betriebsart vorgegebenen Schaltfrequenz oder einer mittleren Schaltfrequenz während einer Schaltperiode aus.

Aus der DE 10 2009 049 820 A1 ist ein Verfahren zur Reduzierung von Netzrückwirkungen eines Wechselrichters bekannt. Zur Vermeidung einer Anregung von Resonanzstellen wird eine Resonanzstelle der Netzimpedanz ermittelt, damit die Schaltfrequenz des Wechselrichters derart verändert werden kann, dass die resultierende Schaltfrequenz nicht mehr auf diese Resonanzstelle trifft.

Der Vorteil der Erfindung besteht darin, dass mittels des Rückführzweigs eine geschlossene Regelschleife für die Anpassung der Schaltfrequenz des Wechselrichters vorliegt, wobei als Regelgröße ein Gütekriterium verwendet wird, welches die momentane Abweichung eines jeweiligen Störspektrums von ihrem lokal (zeitlich und örtlich) zulässigen Grenzwert beschreibt.

Bei einem Betrieb an einem Netz mit einer hohen Kurzschlussleistung kann mit dem hier vorgeschlagenen Ansatz die Schaltfrequenz angepasst werden, insbesondere reduziert werden, und folglich der Wirkungsgrad des Wechselrichters erhöht werden. Für den Betreiber des Wechselrichters kann es wirtschaftlich lohnend sein, in ein leistungsstarkes Netz zu investieren, da weniger Energieverluste entstehen und zudem weniger Abwärme abgeführt werden muss. Zudem kann auch ein normgerechter Betrieb an (zumindest zeitweise) sehr leistungsschwachen Netzen gewährleistet werden. Dazu wird die Schaltfrequenz automatisch geeignet erhöht unter Inkaufnahme erhöhter Schaltverluste (die ggf. zu einem Derating des Wechselrichters führen).

Soweit die Anpassung der Schaltfrequenz zu einer Reduzierung der Schaltfrequenz führt, wird dabei eine Reduzierung der Schaltverluste und damit in der Regel eine Verbesserung des Gesamtwirkungsgrads erreicht, wenn momentan ein Netz mit hoher Qualität zur Verfügung steht. Aufgrund einer reduzierten Schaltfrequenz resultieren zudem geringere Verluste in den Leistungshalbleitern des Wechselrichters. Dies führt zu geringeren Halbleitertemperaturen und damit im Mittel zu einer erhöhten Lebensdauer des Wechselrichters, speziell bei einem Betrieb bei Wechsellast. Insoweit kann das Verfahren gemäß dem hier vorgeschlagenen Ansatz auch gezielt genutzt werden, um - bei geeigneter Netzqualität - bei Überlastsituationen die thermische Belastung des Wechselrichters zu reduzieren. Des Weiteren definieren künftige Richtlinien erhöhte Anforderungen an die Wirkungsgrade bei Teillast. Insbesondere hierfür sind Absenkungen der Schaltfrequenz sinnvoll und mit dem vorgeschlagenen Verfahren auch für die Netzseite anwendbar.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens werden mittels der Dateneinheit Spannungs- und/oder Stromwerte bestimmt oder mittels einer als Dateneinheit / Datenerfassungseinheit fungierenden Messeinheit Spannungsmesswerte und/oder Strommesswerte (Ausgangsspannung und/oder Ausgangsstrom) am Netzfilter aufgenommen. Mittels der Auswertungseinheit wird daraus als Betragsspektrum ein Spannungs-, Strom- oder Leistungsspektrum ermittelt und dieses mittels der Bewertungseinheit mit einem entsprechenden Grenzspektrum oder jeweils mit einem entsprechenden Grenzspektrum verglichen. Dann erfolgt die Anpassung der Schaltfrequenz auf Basis einer Bewertung einer Güte eines Stromspektrums, Spannungsspektrums und/oder eines Leistungsspektrums.

Bei einer weiteren Ausführungsform des Verfahrens werden die mittels der Dateneinheit oder einer als Dateneinheit fungierenden Messeinheit bestimmten Werte bzw. erfassten Messwerte, nämlich die am netzseitigen Anschlusspunkt des Wechselrichters erfassten Messwerte, insbesondere die bezüglich der aktuellen Störaussendung des Wechselrichters erfassten Messwerte (Ausgangsspannung und/oder Ausgangsstrom), mit einer so hohen Abtastfrequenz erfasst, dass das gesamte relevante Störspektrum oder doch zumindest im Wesentlichen das gesamte relevante Störspektrum berechnet werden kann.

Bei einer nochmals weiteren Ausführungsform des Verfahrens wird mittels der Bewertungseinheit eine relative Gesamtstörleistung der Ausgangsspannung und/oder des Ausgangsstroms ermittelt und diese zusätzlich zum Vergleich des Betragsspektrums mit dem Grenzspektrum bei der Anpassung der Schaltfrequenz des Wechselrichters berücksichtigt. Auf diese Weise kann ergänzend sichergestellt werden, dass die jeweilige Gesamtstörleistung einen vorgegebenen oder vorgebbaren Grenzwert nicht überschreitet.

Bei einer speziellen Ausführungsform des Verfahrens erfolgt die Bestimmung oder Erfassung (numerische Ermittlung oder Messung) der Werte bzw. Messwerte mittels der Dateneinheit während einer Betriebssituation, bei welcher der Wechselrichter nicht schaltet (Pulssperre). Die mittels der Anpassungseinheit angepasste Schaltfrequenz kommt daher nicht unmittelbar im Zusammenhang mit der Bestimmung / Erfassung der Werte / Messwerte zur Anwendung, sondern erst später, nämlich dann, wenn die Pulssperre aufgehoben ist und entsprechend die Betriebssituation, bei welcher der Wechselrichter nicht schaltet, beendet ist oder beendet wird. Auf diese Weise kann eine eventuelle Vorbelastung des Netzes ermittelt werden und die Schaltfrequenz daran angepasst werden. Optional kann auch eine Information an den Anwender erfolgen, wenn trotz Anpassung der Schaltfrequenz eine Einhaltung der Grenzwerte nicht möglich ist.

Die oben genannte Aufgabe wird auch mit einer Steuereinrichtung zur Ansteuerung eines Wechselrichters gelöst, die nach dem Verfahren wie hier und im Folgenden beschrieben arbeitet und dazu Mittel zur Durchführung des Verfahrens umfasst. Die Erfindung ist dabei bevorzugt in Software oder in Soft- und Firmware implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuereinheit, in deren Speicher als Mittel zur Durchführung des Verfahrens und seiner Ausgestaltungen ein solches Computerprogramm geladen oder ladbar ist. Wenn im Folgenden Verfahrensschritte oder Verfahrensschrittfolgen beschrieben werden, bezieht sich dies auf Aktionen, die automatisch aufgrund eines solchen Computerprogramms oder automatisch unter Kontrolle des Computerprogramms erfolgen.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen.

Es zeigen

FIG 1    einen an ein speisendes Netz angeschlossenen Netzwechselrichter, der zusammen mit einem vorgeschalteten Netzfilter ein Wechselrichtersystem bildet,

FIG 2    einen Frequenzgang eines Netzfilters,

FIG 3    eine Ausführungsform des hier vorgeschlagenen Wechselrichtersystems,

FIG 4    ein Spannungs-Ausgangsspektrum eines Wechselrichters ohne Netzfilter,

FIG 5    einen LCL-Filter,

FIG 6    einen verdrosselten LCL-Filter mit Dämpfung sowie

FIG 7    ein LZ-Filter mit Dämpfung,

FIG 8    Beispiele für den Betragsfrequenzgang der Ausgangsspannung eines verdrosselten LCL-Netzfilters bei verschiedenen Netzinduktivitäten und

FIG 9    Beispiele für den Betragsfrequenzgang des Ausgangsstroms eines verdrosselten LCL-Netzfilters bei verschiedenen Netzinduktivitäten.

Die Darstellung in FIG 1 zeigt - wie eingangs bereits erwähnt - einen aktiven netzseitigen Wechselrichter (Netzwechselrichter) 10. Dieser ist als Teil eines Wechselrichtersystems 12 gezeigt und wird im Folgenden mitunter auch kurz als Wechselrichter 10 bezeichnet. Ganz rechts ist in der Darstellung in FIG 1 das speisende Netz 14 gezeigt. Eine Induktivität des Netzes 14 ist separat als Netzinduktivität 16 gezeigt. Der Anschluss des Wechselrichtersystems 12 an das Netz 14 erfolgt dreiphasig an einem im Folgenden als Anschlusspunkt (PCC) 18 bezeichneten Netzanschlusspunkt. Dem Wechselrichter 10 ist ein Netzfilter 20 vorgeschaltet. Wechselrichter 10 und Netzfilter 20 bilden zusammen das Wechselrichtersystem 12.

Die Darstellung in FIG 2 zeigt den eingangs bereits erwähnten Frequenzgang eines als Netzfilter 20 fungierenden, nicht verdrosselten LCL-Filters anhand der Übertragungsfunktion zwischen der Ausgangsspannung des Wechselrichters 10 und der resultierenden Spannung am Anschlusspunkt (PCC) 18.

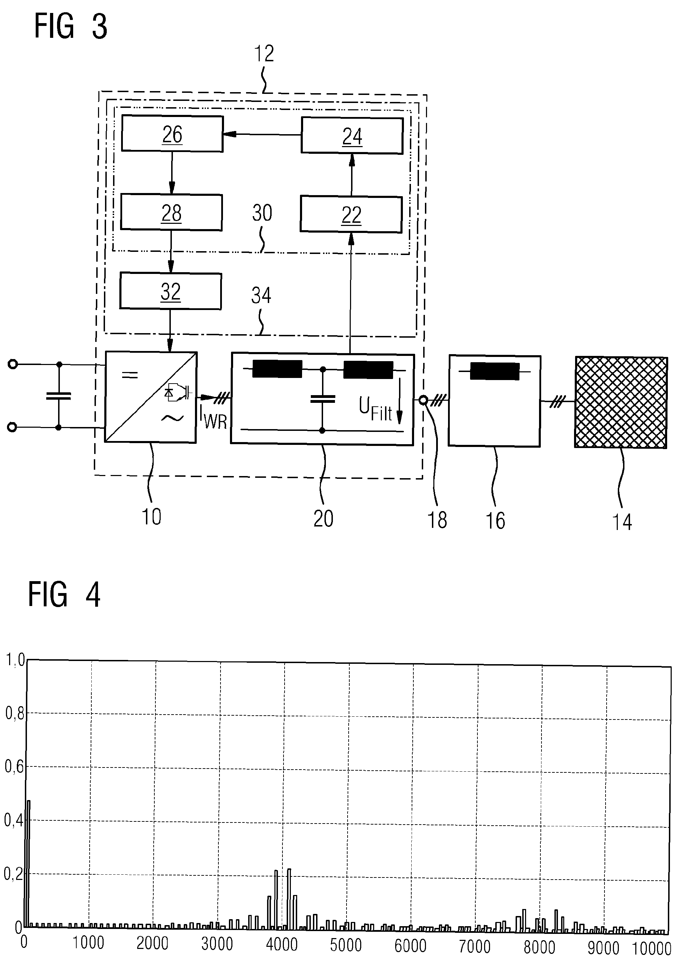

Die Darstellung in FIG 3 zeigt eine Ausführungsform des erfindungsgemäßen Wechselrichtersystems 12. Dieses umfasst neben dem Wechselrichter 10 und dem Netzfilter 20 einen Signalpfad vom Netzfilter 20 zum Wechselrichter 10, so dass sich das Wechselrichtersystem 12 als rückgekoppeltes System darstellt. Im Signalpfad vom Netzfilter 20 zum Wechselrichter 10 befinden sich eine Dateneinheit 22, eine Auswertungseinheit 24, eine Bewertungseinheit 26 und eine Anpassungseinheit 28, die auch in Form einer oder mehrerer Einheiten zusammengefasst sein können. Jedenfalls werden die Dateneinheit 22, die Auswertungseinheit 24, die Bewertungseinheit 26 und die Anpassungseinheit 28 zusammen als Rückführzweig 30 bezeichnet.

Bei der gezeigten Ausführungsform fungiert die Dateneinheit als Datenerfassungseinheit 22 und als Messeinheit 22. Auf dieser Basis - allerdings ohne Verzicht auf eine weitergehende Allgemeingültigkeit - wird die weitere Beschreibung fortgesetzt und die Messeinheit 22 wird mit derselben Bezugsziffer bezeichnet. Grundsätzlich ist aber weiterhin bei jeder Erwähnung einer Messeinheit 22 mitzulesen, dass die mittels der Messeinheit 22 durch Messung erfassten Messwerte auch numerisch bestimmt werden können, so dass dann auf eine Messung verzichtet werden kann. Entsprechend ist der Begriff "Messwert" im Zusammenhang mit der hier vorgelegten Beschreibung weit auszulegen und umfasst nicht nur tatsächlich durch Messung ermittelte Werte, sondern auch numerisch ermittelte Werte von Systemgrößen, die grundsätzlich unmittelbar oder mittelbar durch Messung bestimmt werden könnten.

Die Anpassungseinheit 28 steuert einen grundsätzlich an sich bekannten Modulator 32 oder dergleichen an, welcher wiederum die von dem Wechselrichter 10 umfassten Leistungshalbleiter ansteuert. Die Anpassungseinheit 28 und der Modulator 32 können zu einer Funktioneinheit zusammengefasst sein. Die Gesamtheit der erwähnten Funktioneinheiten 22-28, 32 bildet einer Steuereinheit 34 des Wechselrichtersystems 12. Die Funktionalität einzelner oder aller Funktioneinheiten 22-28, 32 oder der Steuereinheit 34 insgesamt kann in Hardware, Software und/oder Firmware implementiert sein, zum Beispiel indem die Steuereinheit 34 eine nicht dargestellte Verarbeitungseinheit in Form von oder nach Art eines Mikroprozessors umfasst und in einem ebenfalls nicht dargestellten Speicher der Steuereinheit 34 ein beim Betrieb des Wechselrichtersystems 12 mittels der Verarbeitungseinheit ausgeführtes Computerprogramm geladen ist, das eine Implementation der Funktionalität einzelner oder aller Funktioneinheiten 22-28, 32 in Software umfasst.

Mittels der Messeinheit 22 erfolgt eine Messung der Spannung am Anschluss- / Verknüpfungspunkt (PCC) 18. Mittels der Auswertungseinheit 24 erfolgt eine spektrale Auswertung der mittels der Messeinheit 22 gemessenen Spannung. Die spektrale Auswertung erfolgt beispielsweise mittels schneller FourierTransformation (FFT) und die Auswertungseinheit 24 umfasst entsprechend eine Implementation eines FFT-Algorithmus. Die Auswertungseinheit 24 kann bei einer solchen Ausführung demgemäß auch als Fourier-Transformator aufgefasst werden. Mittels der Bewertungseinheit 26 erfolgt eine Bewertung eines am Ausgang der Auswertungseinheit 24 resultierenden Betragsspektrums bezüglich einer Einhaltung definierter Grenzwerte, wie dies weiter unten beschrieben wird. Die Anpassungseinheit 28 bewirkt auf Basis eines jeweiligen Ausgangs der Bewertungseinheit 26 eine Erhöhung oder eine Reduzierung der mittleren Schaltfrequenz des Wechselrichters 10.

Die Darstellung in FIG 4 zeigt beispielhaft das Spannungs-Ausgangsspektrum eines Wechselrichters 10 ohne Netzfilter. Auf der Abszissenachse ist die Frequenz und auf der Ordinatenachse ist die normierte Spannung abgetragen. Kennzeichnend ist der Grundschwingungs-Nutzanteil bei Netzfrequenz (hier 50 Hz), ein Maximum in der Nähe der mittleren Schaltfrequenz (abhängig von der Modulationsart, hier PWM) und Spektralanteile bei Vielfachen der Schaltfrequenz mit kleiner werdender Amplitude. Die Schaltfrequenz beträgt bei der gezeigten Situation 4 kHz.

Eine Änderung der mittleren Schaltfrequenz führt in erster Näherung zu einer entsprechenden Verschiebung der schaltfrequenten Spektralanteile, während die Amplituden und der Grundschwingungsanteil unverändert bleiben. Dies erklärt, weshalb in Verbindung mit einem Netzfilter 20 mit zunehmender Filterwirkung oberhalb einer Resonanzfrequenz (siehe FIG 2) beispielsweise eine Erhöhung der Schaltfrequenz zu geringeren schaltfrequenten Spannungsanteilen am Anschlusspunkt 18 führt.

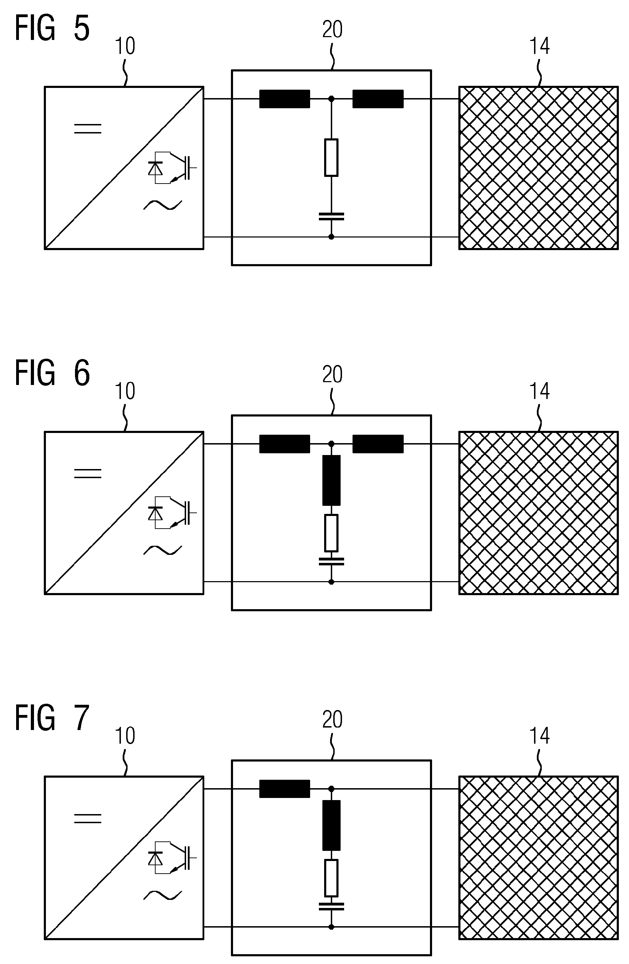

Die Darstellungen in FIG 5, FIG 6 und FIG 7 zeigen Beispiele für unterschiedliche Filtertopologien, die sich in ihren Bauteilkosten und Frequenzgängen unterscheiden und dementsprechend abhängig vom Wechselrichtertyp, von der Schaltfrequenz oder vom Modulationsverfahren ausgewählt werden. Links ist jeweils der Wechselrichter 10 dargestellt und rechts ist das Netz 14 gezeigt.

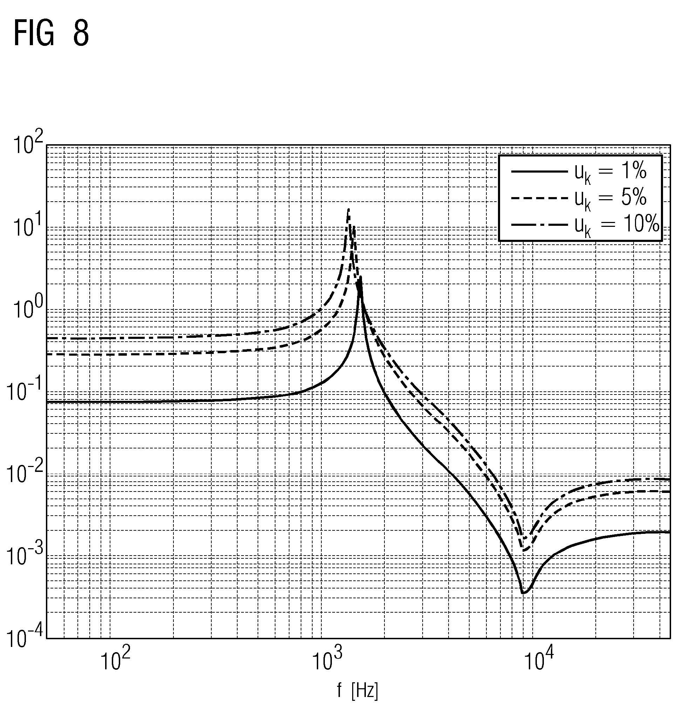

Ein Netzfilter 20 mit passiver Dämpfung gemäß FIG 5 reduziert die in FIG 1 gezeigte Resonanzüberhöhung, wobei anstelle des gezeigten realen Widerstands der Widerstand auch parasitär, zum Beispiel durch die Leitung oder den Kondensator, realisiert sein kann. Die in FIG 6 gezeigte Verdrosselung des Querzweiges des Netzfilters 20 bringt neue dynamische Eigenschaften und erzeugt ein Minimum im Frequenzgang (siehe FIG 8) und führt oberhalb des Minimums zu einer reduzierten Dämpfung. Bei der in FIG 7 gezeigten Variante eines Netzfilters 20 in Form eines LZ-Filters wird davon ausgegangen, dass die netzseitige Induktivität entfallen kann, da im Netz 14 eine Mindestinduktivität vorhanden ist.

Die Darstellung in FIG 8 zeigt den Betragsfrequenzgang der Ausgangsspannung (Amplitudenspektrum des Quotienten der Spannung U(PCC) am Anschlusspunkt 18 und der Ausgangsspannung U(WR) des Wechselrichters 10) eines verdrosselten LCL-Netzfilters 20 gemäß FIG 6 bei verschiedenen Netzinduktivitäten und entsprechenden relativen Netzkurzschlussspannungen $u_K$, hier mit $u_K$ = 1% , $u_K$ = 50% und $u_K$ = 10%.

Gemäß dem hier vorgeschlagenen Ansatz ist vorgesehen, dass die wesentlichen Anteile der schaltfrequenten Störspannung bzw. des Störstroms in einem Frequenzbereich liegen, in dem der Netzfilter 20 eine monoton zunehmende Filterwirkung aufweist. Dann ist der einfache Zusammenhang gegeben, dass mit steigender Frequenz die ins Netz 14 abgegebene Störamplitude sinkt. Mit dieser Voraussetzung ist das Verfahren auf alle hier genannten Filtertypen gemäß FIG 5, FIG 6 und FIG 7 sowie weitere ähnliche Filtertypen anwendbar.

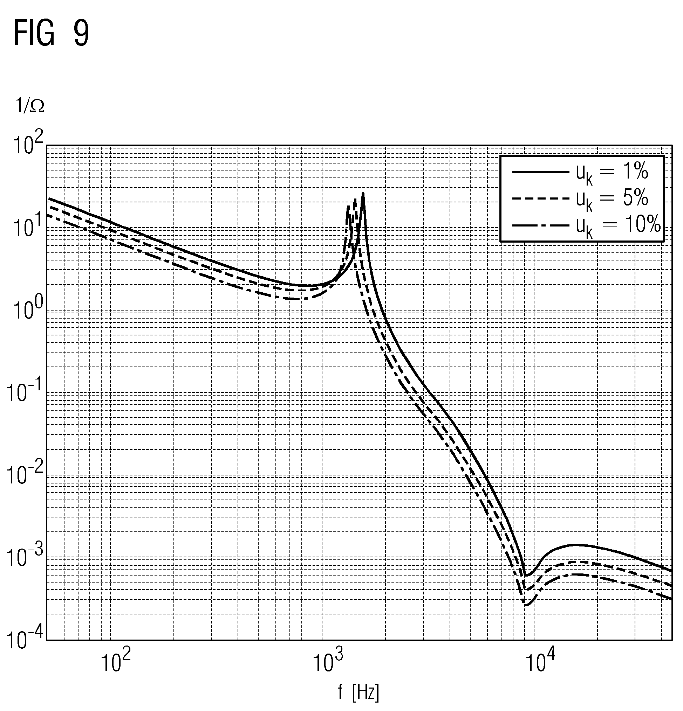

Aufgrund der Impedanz des Netzes 14 (induktiv) steigt der schaltfrequente Spektralanteil im Strom durch den Anschlusspunkt 18 mit zunehmender Netzkurzschlussleistung an und zeigt damit im Vergleich zur Spannung am Anschlusspunkt 18 gerade das umgekehrte Verhalten. Erkennbar wird dies auch im Übertragungsfrequenzgang für den Ausgangsstrom I(PCC) am Anschlusspunkt 18 in Abhängigkeit von der Wechselrichterspannung U(WR), wie dies in der Darstellung in FIG 9 gezeigt ist.

Die Darstellung in FIG 9 zeigt den Betragsfrequenzgang des Ausgangsstroms (Amplitudenspektrum des Quotienten des Stroms I(PCC) am Anschlusspunkt 18 und der Ausgangsspannung U(WR) des Wechselrichters 10) eines verdrosselten LCL-Netzfilters 20 gemäß FIG 6 bei verschiedenen Netzinduktivitäten und entsprechenden relativen Netzkurzschlussspannungen $u_K$, hier mit $u_K$ = 1%, $u_K$ = 5% und $u_K$ = 10%.

Der Anstieg des schaltfrequenten Spektralanteils erklärt sich dadurch, dass eine kleine Netzinduktivität (also hohe Netzkurzschlussleistung) den schaltfrequenten Strömen einen geringeren Widerstand entgegenstellt und diese ins Netz 14 fließen lässt.

Abhängig von einer bei der jeweiligen Applikation zu beachtenden Netznorm oder anderen applikationsspezifischen zeitlichen oder örtlichen Vorgaben kann die Optimierung der Schaltfrequenz so erfolgen, dass entweder die Spannungsstörungen oder die Stromstörungen oder die Spannungsstörungen und die Stromstörungen festgelegte, vorgegebene oder vorgebbare Obergrenzen nicht übersteigen und optional durch eine Wahl einer möglichst geringen Schaltfrequenz die Verlustleistung minimiert wird. Für eine Reduzierung der Verlustleistung wird im Vorfeld beim Filterdesign auf einen reduzierten Materialaufwand geachtet und dabei eine minimierte Worst-Case-Reserve vorgehalten.

Im Folgenden werden die Funktionseinheiten des in FIG 3 gezeigten Rückführzweigs einzeln betrachtet:

Messeinheit 22

Wesentlicher Bestandteil des vorgeschlagenen Ansatzes ist, dass mittels der Messeinheit 22, oder allgemein mittels einer Dateneinheit 22 / Datenerfassungseinheit 22, Werte bzw. Messwerte am netzseitigen Anschlusspunkt 18 des Wechselrichters 10 bestimmt bzw. erfasst werden, insbesondere Messwerte bezüglich der aktuellen Störaussendung des Wechselrichters 10 am Anschlusspunkt 18 erfasst werden, und die Schaltfrequenz in Bezug dazu angepasst wird. Neben den bei Wechselrichtern 10 immer gemessenen Phasenströmen $I_{WR}$ (FIG 3) im Wechselrichter 10 können dafür noch weitere Messaufnehmer genutzt werden.

In der Darstellung in FIG 3 ist insoweit eine Ausführungsform gezeigt, bei der mittels der Messeinheit 22 die Spannungen über dem Querzweig des Netzfilters 20 oder die Wechselrichter-Ausgangsspannung gemessen werden. Zusätzlich werden die Wechselrichterströme und/oder die Ströme im Netzfilter 20 gemessen. Bei bekannten Impedanzwerten für die Bauelemente des Netzfilters 20 können daraus mit Hilfe der komplexen Wechselstromrechnung die Spannungen am Anschlusspunkt 18 berechnet werden.

Alternativ können mittels der Messeinheit 22 zwei oder mehr Leiter-zu-Leiter-Spannungen oder zwei oder mehr Strangspannungen am Anschlusspunkt 18 gemessen werden.

In einer vorteilhaften Ausführungsform der Erfindung wird gemäß dem Abtasttheorem eine von der Messeinheit 22 für die Messungen verwendete Abtastfrequenz mindestens doppelt so groß gewählt wie die Grenzfrequenz, bis zu der das Spektrum der Ausgangsspannung bezüglich der Einhaltung der jeweils geforderten Normen überwacht und bewertet werden muss. Ist beispielsweise ein Frequenzbereich bis 10 kHz von ausschlaggebender Bedeutung, so wird eine Abtastperiode von maximal 50 $\mu$s für die Messung verwendet.

Ein alternativer Ansatz zum Messen und Berechnen des Spannungsspektrums am Anschlusspunkt 18 besteht darin, mittels einer Dateneinheit 22 fortlaufend die wirksame differentielle Netzimpedanz zu bestimmen. Eine Möglichkeit dafür liefert der folgende Zusammenhang für die Gesamtinduktivität:

$$L_{total} = \left| \frac{U_{WR} - U_{Netz}}{(\Delta I_{WR})/(\Delta t)} \right| .$$

Dabei wird mittels der Dateneinheit 22 die Stromänderung $\Delta I_{WR}$ bestimmt oder gemessen, die während einer kurzen Zeitspanne $\Delta t$ entsteht, in der keine Schalthandlung der Halbleiterschalter durchgeführt wurde (z.B. $\Delta t=50\mu s$). Die Wechselrichterspannung $U_{WR}$ und die Netzspannung $U_{Netz}$ dürfen dabei mit ausreichender Genauigkeit als konstant angenommen werden. Von der so berechneten Gesamtinduktivität kann die bekannte Induktivität des Netzfilters 20 abgezogen werden, um einen Schätzwert für die Netzinduktivität $L_N$ zu erhalten. Aus der mittels der Dateneinheit 22 geschätzten Netzinduktivität $L_N$ kann mit dem bekannten Emissionsspektrum des Wechselrichters 10 das Spannungsspektrum am Anschlusspunkt 18 mit Hilfe der komplexen Wechselstromrechnung für die betrachtete Schaltung berechnet werden.

Auswertungseinheit 24, Bewertungseinheit 26

Die mittels der Messeinheit 22 aufgenommenen Spannungsmesswerte werden für einen genügend langen Zeitraum aufgezeichnet, um auch die Signalanteile bei kleinen Frequenzen zu erfassen. Sinnvoll ist mindestens eine Netzperiode. In zyklischen Abständen (z.B. einmal pro Sekunde) wird mittels der Auswertungseinheit 24 das Betragsspektrum $|F(f)|$ dieser Messwerte berechnet. Die dafür notwendige Rechnerleistung ist in heutigen Wechselrichtern 10 typischerweise vorhanden. In diesem Zusammenhang ist darauf hinzuweisen, dass die Messeinheit 22, die Auswertungseinheit 24, die Bewertungseinheit 26 und die Anpassungseinheit 28 keine gegenständlichen und vom Wechselrichter 10 unabhängige Einheiten sein müssen, sondern vom Wechselrichter 10 als entsprechende Funktionen / Funktionseinheiten umfasst sein können, zum Beispiel in Form einer Implementation der jeweiligen Funktion in Hardware, Firmware und/oder Software.

Das berechnete Betragsspektrum wird mittels der Bewertungseinheit 26 mit einem zuvor gewählten Grenzspektrum |G(f)| verglichen, welches die zulässigen Störspannungsanteile im zu überwachenden Frequenzbereich $f_{Min}...f_{Max}$. beschreibt. Das Maximum der Differenz zwischen dem berechneten Betragsspektrum (Ist-Spektrum) und dem Grenzspektrum kann beispielsweise für eine Frequenzregelung verwendet werden.

Optional wird mittels der Bewertungseinheit 26 die relative Gesamtstörspannung (total harmonic distortion - THD)

$$THD_U = \frac{\sqrt{U_n^2 + U_{n+1}^2 + ... + U_k^2}}{U_1}$$

im zu überwachenden Frequenzbereich zwischen $n \cdot f_{Netz} = f_{Min}$ bis $k \cdot f_{Netz} = f_{Max}$ berechnet, also die Summe der Quadrate aller Spektralamplituden. Typischerweise darf die relative Gesamtstörspannung (THD) einen vorgegebenen oder vorgebbaren, insbesondere parametrierbaren Grenzwert ebenfalls nicht überschreiten. Analog kann die Berechnung des THD auch für den Strom erfolgen.

Bei einer grundsätzlich optionalen zusätzlichen Berücksichtigung der Gesamtstörspannung wird aufgrund der Betrachtung des Grenzspektrums einerseits geprüft, ob keine einzelne Spektrallinie eine bestimmte Höhe überschreitet, und andererseits aufgrund der Betrachtung der Gesamtstörspannung zusätzlich geprüft, ob die Summe aller Spektrallinien einen Grenzwert einhält. Bei der Betrachtung der Gesamtstörspannung kann diese auch gewichtet sein, indem die einzelnen Summanden unter der Wurzel mit geeignet vorgegebenen Faktoren gewichtet werden.

Anpassungseinheit 28

Mittels der Bewertungseinheit 26 wird in dem von dieser ausgeführten Auswertungsschritt ein Gütekriterium oder werden mehrere Gütekriterien berechnet, nämlich zumindest das Maximum der Differenz zwischen dem berechneten Betragsspektrum und dem Grenzspektrum oder optional das Maximum der Differenz zwischen dem berechneten Betragsspektrum und dem Grenzspektrum sowie zusätzlich die relative Gesamtstörspannung. Anhand des Gütekriteriums oder der Gütekriterien wird mittels der Anpassungseinheit 28 zyklisch eine Anpassung der Schaltfrequenz des Wechselrichters 10 vorgenommen. Bei einer aktuell zu geringen Schaltfrequenz ist der Oberschwingungsanteil in der Spannung (oder im Strom) zu groß. Anhand der Betrachtung des Grenzspektrums wird sich dabei ergeben, dass zumindest eine einzelne Spektrallinie einen durch das Grenzspektrum vorgegebenen Grenzwert überschreitet. Anhand der optionalen Betrachtung der Gesamtstörspannung kann sich zudem ergeben, dass diese einen vorgegebenen Grenzwert überschreitet. Da aufgrund der Filtercharakteristik des Netzfilters 20 der Oberschwingungsanteil mit zunehmender Schaltfrequenz sinkt, wird für den nächsten Bewertungszyklus eine neue, höhere Schalt- / Pulsfrequenz vorgegeben.

Dafür kommen mehrere Möglichkeiten in Frage. Zwei Möglichkeiten werden im Folgenden beschrieben und zusammenfassend als iterative Anpassung der Schaltfrequenz bezeichnet:

Gemäß einem heuristischen Ansatz wird die Schaltfrequenz des Wechselrichters 10 um einen vorgegebenen oder vorgebbaren, insbesondere parametrierbaren Faktor oder Offset erhöht, wenn eines der Gütekriterien über dem Grenzwert liegt, wenn also zum Beispiel bei zumindest einer Frequenz die Amplitude des Betragsspektrums |F(f)| der mittels der Messeinheit 22 aufgenommenen Spannungsmesswerte oberhalb eines zum Beispiel durch das Grenzspektrum |G(f)| vorgegebenen Limits liegt. Liegt eines der Gütekriterien in einem Toleranzband unterhalb des Grenzwerts, so wird die Schaltfrequenz beibehalten. Liegen alle Gütekriterien unterhalb des Toleranzbands, so wird die Schaltfrequenz des Wechselrichters 10 um einen vorgegebenen oder vorgebbaren, insbesondere parametrierbaren Faktor oder Offset reduziert.

Alternativ kommt für die Anpassung der Schaltfrequenz des Wechselrichters 10 eine als Proportionalregler fungierende Anpassungseinheit 28 in Betracht. Dabei wird - siehe unten: "Spektrumbewertung" - ein prozentuales Gütekriterium herangezogen, das momentan den "kritischen Pfad" darstellt (also bei Überschreitung eines Grenzwerts am weitesten oberhalb des Grenzwerts liegt, oder - falls alle Grenzwerte eingehalten werden - den kleinsten Abstand zu den Grenzwerten aufweist). Die vorzeichenbehaftete Abweichung vom Grenzwert wird mit einem vorgegebenen oder vorgebbaren, insbesondere parametrierbaren positiven Faktor $K$ gewichtet und ergibt einen momentanen Frequenzoffset $\Delta f_{Shalt}$, der zum jeweiligen Nominalwert der Schaltfrequenz $\Delta f_{Schalt,nml}$ addiert wird:

Spektrumbewertung:

$$\Delta f_{Schalt,1} = K_1 \cdot \max_f \left\{ \frac{\left| \left| F(f) \right| - \left| G(f) \right| \right|}{\left| G(f) \right|} \right\}, \quad f = f_{Min} \dots f_{Max}$$

Optionale THD-Bewertung:

$$\Delta f_{Schalt,2} = K_2 \cdot \left\{ \frac{THD_U \left( f_{Schalt,aktuell} \right) - THD_{U,Grenzwert}}{THD_{U,Grenzwert}} \right\}$$

Regler:

$$f_{Schalt,neu} = f_{Schalt,nml} + \Delta f_{Schalt,1}$$

bzw.

$$f_{Schalt,neu} = f_{Schalt,nml} + \max \left\{ \Delta f_{Schalt,1}, \Delta f_{Schalt,2} \right\}$$

Bei einer Einhaltung der Grenzwerte wird die Schaltfrequenz - auch bei dem zuvor beschriebenen heuristischen Ansatz - reduziert. Auf dieser Reduzierung der Schaltfrequenz, die so lange erfolgt, solange die Grenzwerte eingehalten werden, basiert bei der iterativen Anpassung der Schaltfrequenz die schrittweise Minimierung der Schaltfrequenz und die resultierende Minimierung der Verlustleistung. Anders als bei der zuvor beschriebenen heuristischen Anpassung der Schaltfrequenz erfolgt die Reduzierung der Schaltfrequenz hier nicht mit einer fest vorgegebenen Schrittweite. Vielmehr ergibt sich die Schrittweite in jedem Bewertungsschritt aufgrund des momentanen Abstands zu dem Grenzwert oder den Grenzwerten. Bei einem großen Abstand resultiert eine größere Schrittweite und entsprechend eine größere Reduzierung der Schaltfrequenz. Bei einem geringen Abstand resultieren entsprechend eine geringere Schrittweite und eine geringere Reduzierung der Schaltfrequenz. Bei einer Verletzung der Grenzwerte wird die Schaltfrequenz erhöht und das Maß der Erhöhung der Schaltfrequenz ist - analog zur vorher beschriebenen Reduzierung der Schaltfrequenz - vom Umfang der Verletzung der Grenzwerte abhängig.

Eine Aktivierung der grundsätzlich optionalen Bewertung der Gesamtstörspannung THD oder des Gesamtstörstroms kann mittels des Faktors $K_2$ erfolgen. Bei $K_2 = 0$ ist die Bewertung der Gesamtstörspannung deaktiviert. Auf dieser Basis ist ebenso eine Deaktivierung der Spektrumsbewertung möglich, so dass die Anpassung der Schaltfrequenz dann nur auf Basis der Bewertung der Gesamtstörspannung erfolgt. Gleichfalls ist mittels einer geeigneten Wahl der Faktoren $K_1$ und $K_2$ eine freie Gewichtung der beiden möglichen Einflussfaktoren für die Bestimmung der jeweils neuen Schaltfrequenz möglich. Grundsätzlich kann als alternatives Kriterium auch der Gesamtstörstrom und/oder die aus Strom und Spannung berechnete Gesamtstörleistung verwendet werden.

Allgemein formuliert wird mittels der Anpassungseinheit 28 eine Schaltfrequenz ausgewählt, bei welcher zumindest eine Einhaltung des Gütekriteriums oder der Gütekriterien gewährleistet ist, also eine Schaltfrequenz, die zu keiner Grenzwertverletzung führt. Des Weiteren wird mittels der Anpassungseinheit 28 die Schaltfrequenz reduziert, soweit dies im Rahmen der Einhaltung der Grenzwerte möglich ist. Mit der resultierenden Reduzierung der Schaltfrequenz sinkt vorteilhaft die Verlustleistung. Allerdings wird mit zunehmender Reduzierung der Schaltfrequenz auch die Filterwirkung des Netzfilters 20 schlechter, wie dies zum Beispiel anhand des in FIG 2 gezeigten Filterfrequenzgangs ersichtlich ist. Die Reduzierung der Schaltfrequenz findet folglich dort ihr Ende, wo aufgrund der reduzierten Filterwirkung des Netzfilters 20 eine Störaussendung des Wechselrichters 10 resultiert, die zu einer Verletzung zumindest eines Grenzwerts führt. Dann wird die Schaltfrequenz erhöht, bei dem oben skizzierten heuristischen Ansatz um einen vorgegebenen oder vorgebbaren Wert oder bei dem Ansatz mittels eines Proportionalreglers um einen vom Umfang der Verletzung des oder jedes Grenzwerts abhängigen Wert.

Naheliegende Erweiterungen einer solchen Regelungsfunktionalität (Proportionalregler) der Anpassungseinheit 28 sind Integralanteile für die Regelabweichung (PI-Regler), zusätzliche differenzierende Signalpfade (PD-Regler) und Toleranzbänder. Im letzteren Fall wird beispielsweise keine Änderung der Schaltfrequenz des Wechselrichters 10 vorgenommen, wenn die neue Schaltfrequenz in einem Bereich $f_{Schalt,nml,min} < f_{Schalt,nml}$ bis $f_{Schalt,nml}$ liegt.

Zusätzlich oder alternativ kann die Dynamik der Regelung mittels digitaler Glättungsglieder im Istwert-Signalpfad (Signalpfad zur Anpassungseinheit 28) und/oder im Ausgangs-Signalpfad (Signalpfad von der Anpassungseinheit 28 zum Wechselrichter 10) wunschgemäß angepasst werden. Insoweit kommt zum Beispiel die Verwendung eines Glättungsglieds mit PT1-Verhalten in Betracht.

Abhängig von örtlichen Anforderungen kann auch eine Betrachtung und Bewertung des Stromspektrums am Anschlusspunkt 18 erforderlich sein. Die beschriebenen Schritte für die Frequenzanpassung werden dann um die entsprechenden Größen für die Güte des Stromspektrums $THD_I$ und/oder für die Güte eines aus Strom- und Spannungswerten berechenbaren Spektrums, zum Beispiel eines Leistungsspektrums, erweitert.

Mittels der Überwachung des Spannungsspektrums und/oder mittels der Überwachung zumindest eines anderen Gütekriteriums ist die Einhaltung der Grenzwerte auch dann gewährleistet, wenn am gleichen Anschlusspunkt 18 beispielsweise weitere schaltfrequente Wechselrichter 10 oder nichtlineare Verbraucher angeschlossen sind. Zu beachten ist, dass dann meist eine genügend große Glättung der Schaltfrequenzänderung realisiert werden muss, um Schaltfrequenzschwingungen oder Schwebungen zu verhindern. Ein D-Anteil in der Regelung wirkt ebenfalls dämpfend auf das Systemverhalten.

Optional erfolgt bei einer iterativen Anpassung der Schaltfrequenz auch eine Anpassung der jeweils resultierenden Schrittweite. Bei einem insoweit ergänzten Verfahren werden bei einer Schaltfrequenz oberhalb einer für den Wechselrichter 10 festgelegten (Bemessungs-) Schaltfrequenz mit zunehmender Schaltfrequenz die Schrittweite für eine weitere Erhöhung der Schaltfrequenz verkleinert und/oder die Schrittweite für eine Absenkung der Schaltfrequenz vergrößert. Alternativ oder kumulativ werden unterhalb der (Bemessungs-) Schaltfrequenz die Schrittweite für eine weitere Absenkung der Schaltfrequenz verkleinert und die Schrittweite für eine Erhöhung der Schaltfrequenz vergrößert. Mit einer solchen Ergänzung des Verfahrens wird erreicht, dass jeder Wechselrichter 10 eine Tendenz erhält, im Bereich seiner Bemessungsschaltfrequenz zu arbeiten.

Dies kann noch dadurch ergänzt werden, dass die Anpassung der resultierenden Schrittweiten derart erfolgt, dass ein Unterschied zwischen der Schrittweite zur Erhöhung der Schaltfrequenz und der Schrittweite zur Reduzierung der Schaltfrequenz mit zunehmendem Abstand von der für den Wechselrichter 10 festgelegten Bemessungsschaltfrequenz zunimmt.

Das Bewertungssystem kann auch arbeiten, wenn der Wechselrichter 10 nicht taktet (Pulssperre) und somit keine Störspannungen aussendet. Dies ist sinnvoll, um die Vorbelastung des Netzes 14 zu ermitteln und den Anwender ggf. auf den Netzzustand hinzuweisen. Zudem ermöglicht es eine Klärung einer "Schuldfrage", wenn bei Betrieb des Wechselrichters 10 die Netznormen nicht eingehalten werden, wenn andere Netzteilnehmer die Störverursacher sind.

Vorausberechnung der minimal möglichen Schaltfrequenz

Da häufig die zulässigen Spannungsemissionen eines Geräts mit steigender Schaltfrequenz sinken, kann es sein, dass eine Erhöhung der Schaltfrequenz die Netzverträglichkeit nicht verbessert oder eine Reduzierung der Schaltfrequenz die Netzverträglichkeit nicht verschlechtert. Insofern kann der Fall auftreten, dass die oben beschriebene Anpassung der Schaltfrequenz zu keiner befriedigenden Lösung führt. Ob dem so ist oder nicht hängt von dem Verlauf der Filterübertragungsfunktion und der dem Grenzspektrum zugrunde liegenden Grenzwertkurve über der Frequenz ab. Konkret tritt dieses Verhalten auf, wenn der Gradient der Grenzwertkurve größer als der Gradient der Filterübertragungsfunktion ist.

Um bei allen bekannten Verläufen von Filterübertragungsfunktionen und Grenzwertkurven die minimale Schaltfrequenz zu bestimmen, die im Netzwechselrichter erforderlich ist, werden bei einer besonderen Ausführungsform des hier vorgeschlagenen Ansatzes mittels der Dateneinheit 22 nicht nur Werte am netzseitigen Anschlusspunkt 18 des Wechselrichters 10 bestimmt, insbesondere mittels einer als Messeinheit fungierenden Dateneinheit 22 die Spannung am Anschlusspunkt 18 gemessen. Auf Basis dieser Bestimmung bzw. Messung wird auch abgeschätzt, wie die Emissionskurve am Anschlusspunkt 18 bei einer geänderten Schaltfrequenz, insbesondere einer gemäß dem oben beschriebenen Ablauf geänderten Schaltfrequenz, aussehen wird. Diese Emissionskurve am Anschlusspunkt 18 ist abhängig von der zum Analysezeitpunkt vorliegenden frequenzabhängigen Netzimpedanz. Diese kann, wie weiter oben beschrieben, aus der Spannungsmessung, der Kenntnis des Spektrums des Stroms $I_{WR}$ des Wechselrichters 10 und der Übertragungsfunktion des Netzfilters 20 ermittelt werden. Die geschätzte Emissionskurve am Anschlusspunkt 18 bei einer geänderten Schaltfrequenz wird dadurch gewonnen, dass die aus der ermittelten Impedanz der Netzinduktivität 16 und der bekannten Topologie des Netzfilters 20 ermittelte Übertragungsfunktion (siehe FIG 2) auf das bei geänderter Schaltfrequenz erwartete Emissionsspektrum des Stromes $I_{WR}$ des Wechselrichters 10 angewandt wird.

Diese berechnete Emissionskurve wird mit der Grenzwertkurve verglichen und es wird ausgewertet, ob die Grenzwerte eingehalten sind. Der Vergleich kann mittels der Daten- / Messeinheit 22 oder mittels der Anpassungseinheit 28 erfolgen. Diese Berechnung wird vorteilhafterweise bei der kleinsten möglichen Schaltfrequenz begonnen. Werden damit die Grenzwerte eingehalten, wird diese Schaltfrequenz gewählt und damit der bestmögliche Wirkungsgrad erreicht. Dies ist ein Beispiel dafür, dass in Abhängigkeit vom Ergebnis des Vergleichs, nämlich dem Ergebnis, dass die Grenzwerte eingehalten werden, eine Schaltfrequenz des Wechselrichters 10 angepasst wird. Die Auswahl der Schaltfrequenz und die Vorgabe der resultierenden Schaltfrequenz für den Wechselrichter 10 kann ebenfalls mittels der Daten- / Messeinheit 22 oder mittels der Anpassungseinheit 28 erfolgen.

Werden die Grenzwerte nicht eingehalten, so wird die Berechnung (mittels der Daten- / Messeinheit 22 oder mittels der Anpassungseinheit 28) mit einer um eine vorgegebene oder vorgebbare Schrittweite (z.B. 100 Hz) erhöhten Schaltfrequenz wiederholt. Diese Wiederholungen werden so lange fortgesetzt, bis eine Schaltfrequenz gefunden ist, mit der die Grenzwertkurve eingehalten wird. Dies ist ein Beispiel dafür, dass in Abhängigkeit vom Ergebnis des Vergleichs, nämlich dem Ergebnis, dass die Grenzwerte nicht eingehalten werden, eine Schaltfrequenz des Wechselrichters 10 angepasst wird, nämlich iterativ angepasst wird. Wird bei maximal möglicher Schaltfrequenz die Grenzwertkurve nicht eingehalten, so kann eine Warnung an den Betreiber des den Wechselrichter 10 umfassenden Geräts abgesetzt werden, dass dieser momentan mit nicht normgerechten Netzrückwirkungen arbeitet.

Die Vorausberechnung der minimal möglichen Schaltfrequenz erfolgt zum Beispiel immer beim Einschalten des jeweiligen Geräts, welches das Wechselrichtersystem 12 umfasst. Alternativ oder zusätzlich kann die Vorausberechnung auch regelmäßig während der ansonsten iterativen Anpassung der Schaltfrequenz erfolgen, zum Beispiel indem zu vorgegebenen oder vorgebbaren, insbesondere äquidistanten Zeitpunkten jeweils eine Vorausberechnung der Schaltfrequenz erfolgt und die ermittelte minimal mögliche Schaltfrequenz gewissermaßen als Startwert für eine bis zur nächsten Vorausberechnung erfolgende iterative Anpassung (Korrektur) der Schaltfrequenz verwendet wird.

Insoweit kann die Vorausberechnung der minimal möglichen Schaltfrequenz die oben beschriebene iterative Anpassung der Schaltfrequenz sinnvoll ergänzen, zum Beispiel indem beim Einschalten mittels der Vorausberechnung die minimal mögliche Schaltfrequenz ermittelt und diese damit als optimaler Startwert für weitere betriebs- und lastbedingte Anpassungen verwendet wird. Bei einer regelmäßigen Vorausberechnung kann diese die iterative Anpassung der Schaltfrequenz auch ersetzen. Insofern handelt es sich bei der Vorausberechnung der minimal möglichen Schaltfrequenz auch um einen von der zuvor beschriebenen iterativen Anpassung der Schaltfrequenz unabhängigen Aspekt der hier vorgestellten Neuerung.

Zur Ausführung einer solchen auf einer Vorausberechnung basierenden Anpassung der Schaltfrequenz ist ein Rückführzweig 30 mit einer Dateneinheit 22 zur Bestimmung / Messung der relevanten Werte und einer Anpassungseinheit 28 ausreichend. Optional kann auch die Funktion der Dateneinheit 22 und der Anpassungseinheit 28 in einer einzelnen Einheit zusammengefasst sein, so dass der Rückführzweig 30 dann - je nach Betrachtungsweise - nur noch eine Dateneinheit 22 oder nur noch eine Anpassungseinheit 28 umfasst. Ein zur Ausführung ausschließlich eines solchen Verfahrens bestimmtes Wechselrichtersystem 12 mit einem Wechselrichter 10 und einem Netzfilter 20 umfasst entsprechend eine Dateneinheit 22 und/oder eine Anpassungseinheit 28, wobei mittels der Daten- oder Anpassungseinheit 22, 28 am netzseitigen Anschlusspunkt 18 des Wechselrichters 10 Werte, insbesondere Messwerte bezüglich der aktuellen Störaussendung des Wechselrichters 10 am Anschlusspunkt 18, bestimmbar sind, wobei mittels der Daten- oder Anpassungseinheit 22, 28 ein geschätzter Verlauf einer Emissionskurve ermittelbar ist, wobei mittels der Daten- oder Anpassungseinheit 22, 28 die geschätzte Emissionskurve mit einem vorgegebenen oder vorgebbaren Grenzspektrum verglichen wird und wobei mittels der Daten- oder Anpassungseinheit 22, 28 in Abhängigkeit vom Ergebnis des Vergleichs eine Schaltfrequenz des Wechselrichters 10 anpassbar ist.


Verlustleistungsbetrachtung

Unabhängig von der Schaltungstopologie des Wechselrichters 10 und dem Typ der im Wechselrichter 10 verwendeten Leistungshalbleiter gilt, dass die Schaltverluste mit der Höhe der Schaltfrequenz zunehmen. Der Wirkungsgrad des Wechselrichters 10 kann also erhöht werden, wenn die Schaltfrequenz - wie beschrieben - stets so niedrig wie möglich gewählt wird.

Für die Verluste im Gesamtsystem von Wechselrichter 10 und Netzfilter 20 ist jedoch zu beachten, dass mit kleinerer Schaltfrequenz der Stromrippel (Stromanteil im schaltfrequenten Bereich) zunimmt und damit die Verluste im Netzfilter 20, speziell in der Kommutierungsdrossel, zunehmen. Im Einzelfall ist daher zu bewerten, ob insgesamt eine Reduzierung der Verluste erreicht wird. In der Regel ist der Verlustanstieg in der Drossel jedoch geringer als der Gewinn im Wechselrichter 10. Selbst wenn dies nicht der Fall sein sollte, kann der hier vorgeschlagene Ansatz sinnvoll sein, da die thermischen Zeitkonstanten der Drossel oder Drosseln erheblich größer sind als die thermischen Zeitkonstanten der Leistungshalbleiter. Somit kann der Ansatz bei der Bewältigung von Überlastsituationen helfen. Zudem ist eine Erhöhung der mittleren Kühlleistung für den Netzfilter 20 häufig technisch einfacher und kostengünstiger realisierbar als eine entsprechende Kühlleistungserhöhung für die Leistungshalbleiter des Wechselrichters 10.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Es werden ein Verfahren zum Betrieb eines Wechselrichtersystems 12 und ein nach dem Verfahren arbeitender Wechselrichter 10 angegeben, wobei eine Schaltfrequenz ermittelt wird, die vorgegebenen oder vorgebbaren Gütekriterien genügt, wobei die Schaltfrequenz reduziert wird, solange die Gütekriterien eingehalten werden und ein entsprechender Grenzwert oder entsprechende Grenzwerte nicht verletzt wird bzw. werden. Indem die Schaltfrequenz des Wechselrichters 10 so lange reduziert wird, solange keine Grenzwertverletzung besteht, ergibt sich vorteilhaft eine Verringerung der Verlustleistung. Wenn es im Betrieb zu einer Grenzwertverletzung kommt, wird die Schaltfrequenz erhöht, bis die Grenzwertverletzung nicht mehr besteht. Für den jeweils zugrunde liegenden Betriebs- oder Lastzustand ist diese Schaltfrequenz eine Schaltfrequenz, die dem Gütekriterium oder den Gütekriterien genügt, und auch die erhöhte Schaltfrequenz ist eine optimale Schaltfrequenz in dem Sinne, als diese die für den Betriebs- oder Lastzustand minimal mögliche Schaltfrequenz darstellt.

Die hier vorgestellte Neuerung ist demnach ein Verfahren zum Betrieb eines Wechselrichtersystems 12 und ein korrespondierendes Wechselrichtersystem 12, welches einen Wechselrichter 10, einen Netzfilter 20 und einen Rückführzweig 30 vom Netzfilter 20 zum Wechselrichter 10 umfasst, wobei mittels einer Daten- oder Messeinheit 22 Werte bzw. Messwerte bezüglich einer aktuellen Störaussendung des Wechselrichters 10 bestimmt bzw. erfasst werden, wobei mittels einer Auswertungseinheit 24 ein Maß für die aktuelle Störaussendung, insbesondere ein Betragsspektrum der erfassten Werte oder Messwerte, ermittelt wird, wobei mittels einer Bewertungseinheit 26 das Maß für die Störaussendung, insbesondere das Betragsspektrum, mit einem vorgegebenen oder vorgebbaren Grenzwert bzw. Grenzspektrum verglichen wird und wobei mittels einer der Daten- oder Messeinheit 22, der Auswertungseinheit 24 und der Bewertungseinheit 26 im Rückführzweig 30 nachfolgenden Anpassungseinheit 28 in Abhängigkeit vom Ergebnis des Vergleichs eine Schaltfrequenz des Wechselrichters 10 anpassbar ist und im Betrieb angepasst wird.

**Patentansprüche**

1. Verfahren zum Betrieb eines Wechselrichtersystems (12), welches einen Wechselrichter (10), einen Netzfilter (20) und einen Rückführzweig (30) vom Netzfilter (20) zum Wechselrichter (10) umfasst,
wobei der Rückführzweig (30) eine Dateneinheit (22), eine Auswertungseinheit (24), eine Bewertungseinheit (26) und eine Anpassungseinheit (28) umfasst,
wobei mittels der Dateneinheit (22) Werte an einem netzseitigen Anschlusspunkt (18) des Wechselrichters (10) bestimmt werden,
wobei mittels der im Rückführzweig (30) der Dateneinheit (22) nachfolgenden Auswertungseinheit (24) ein Betragsspektrum der Werte ermittelt wird,
wobei mittels der im Rückführzweig (30) der Auswertungseinheit (24) nachfolgenden Bewertungseinheit (26) das Betragsspektrum mit einem vorgegebenen oder vorgebbaren Grenzspektrum verglichen wird und
wobei mittels der im Rückführzweig (30) der Bewertungseinheit (26) nachfolgenden Anpassungseinheit (28) in Abhängigkeit vom Ergebnis des Vergleichs eine Schaltfrequenz des Wechselrichters (10) angepasst wird.

2. Verfahren nach Anspruch 1, wobei mittels der Dateneinheit (22) Spannungs- und/oder Strommesswerte am Netzfilter (20) aufgenommen werden und mittels der Auswertungseinheit (24) als Betragsspektrum ein Spannungs-, Strom- oder Leistungsspektrum ermittelt wird und dieses mittels der Bewertungseinheit (26) mit einem entsprechenden Grenzspektrum verglichen wird.

3. Verfahren nach einem der vorangehenden Ansprüche, wobei mittels der Bewertungseinheit (26) eine relative Gesamtstörspannung und/oder ein Gesamtstörstrom und/oder eine Gesamtstörleistung ermittelt wird und diese bzw. dieser zusätzlich zum Vergleich des Betragsspektrums mit dem Grenzspektrum bei der Anpassung der Schaltfrequenz des Wechselrichters (10) berücksichtigt wird.

4. Verfahren nach einem der vorangehenden Ansprüche, wobei die Erfassung der Messwerte mittels der Datenerfassungseinheit (22) während einer Betriebssituation erfolgt, bei welcher der Wechselrichter (10) nicht schaltet, und wobei die mittels der Anpassungseinheit (28) angepasste Schaltfrequenz verwendet wird, sobald die Betriebssituation, bei welcher der Wechselrichter (10) nicht schaltet, beendet ist.

5. Verfahren nach einem der vorangehenden Ansprüche, wobei eine minimal mögliche Schaltfrequenz vorausberechnet und als Basis für die Anpassung der Schaltfrequenz anhand des Vergleichs des Betragsspektrums und des Grenzspektrums verwendet wird.

6. Verfahren nach einem der vorangehenden Ansprüche, wobei oberhalb einer für den Wechselrichter (10) festgelegten Bemessungsschaltfrequenz eine Schrittweite für eine Anpassung der Schaltfrequenz zu einer höheren Schaltfrequenz kleiner gewählt wird als die Schrittweite für eine Anpassung zu einer geringeren Schaltfrequenz.

**7.** Verfahren nach einem der vorangehenden Ansprüche, wobei unterhalb einer für den Wechselrichter (10) festgelegten Bemessungsschaltfrequenz eine Schrittweite für eine Anpassung der Schaltfrequenz zu einer höheren Schaltfrequenz größer gewählt wird als die Schrittweite für eine Anpassung zu einer geringeren Schaltfrequenz.

**8.** Verfahren nach Anspruch 6 oder 7, wobei ein Unterschied zwischen der Schrittweite zur Erhöhung der Schaltfrequenz und der Schrittweite zur Reduzierung der Schaltfrequenz mit zunehmendem Abstand von der für den Wechselrichter (10) festgelegten Bemessungsschaltfrequenz zunimmt.

**9.** Verfahren zum Betrieb eines Wechselrichtersystems (12), welches einen Wechselrichter (10), einen Netzfilter (20) und in einem Rückführzweig (30) vom Netzfilter (20) zum Wechselrichter (10) eine Dateneinheit (22) und/oder eine Anpassungseinheit (28) umfasst,
wobei mittels der Daten- und/oder Anpassungseinheit (22, 28) Werte an einem netzseitigen Anschlusspunkt (18) des Wechselrichters (10) bestimmt werden,
wobei auf Basis der bestimmten Werte ein Verlauf einer Emissionskurve geschätzt wird,
wobei die geschätzte Emissionskurve mit einem vorgegebenen oder vorgebbaren Grenzspektrum verglichen wird und
wobei in Abhängigkeit vom Ergebnis des Vergleichs eine Schaltfrequenz des Wechselrichters (10) angepasst wird.

**10.** Verfahren nach Anspruch 9, wobei die Schätzung der Emissionskurve iterativ mit einer um eine vorgegebene oder vorgebbare Schrittweite erhöhten Schaltfrequenz wiederholt wird, bis alle durch das Grenzspektrum definierten Grenzwerte eingehalten werden, wenn bei einem Ergebnis des Vergleichs der Emissionskurve mit dem Grenzspektrum eine Verletzung zumindest eines durch das Grenzspektrum definierten Grenzwerts resultiert.

**11.** Verfahren nach Anspruch 9 oder 10, wobei die Schätzung des Verlaufs der Emissionskurve auf Basis der zum Analysezeitpunkt vorliegenden frequenzabhängigen Netzimpedanz erfolgt.

**12.** Computerprogramm mit Programmcodemitteln, um alle Schritte von jedem beliebigen der vorangehenden Ansprüche durchzuführen, wenn das Computerprogramm mittels einer Steuereinheit (34) des Wechselrichters (10) ausgeführt wird.

**13.** Wechselrichtersystem (12) mit einem Wechselrichter (10) und einem Netzfilter (20) und einem Rückführzweig (30) vom Netzfilter (20) zum Wechselrichter (10),
wobei der Rückführzweig (30) eine Dateneinheit (22), eine Auswertungseinheit (24), eine Bewertungseinheit (26) und eine Anpassungseinheit (28) umfasst,
wobei mittels der Dateneinheit (22) Werte an einem netzseitigen Anschlusspunkt (18) des Wechselrichters (10) bestimmbar sind,
wobei mittels der im Rückführzweig (30) der Dateneinheit (22) nachfolgenden Auswertungseinheit (24) ein Betragsspektrum der erfassten Messwerte ermittelbar ist,
wobei mittels der im Rückführzweig (30) der Auswertungseinheit (24) nachfolgenden Bewertungseinheit (26) das Betragsspektrum mit einem vorgegebenen oder vorgebbaren Grenzspektrum vergleichbar ist und
wobei mittels der im Rückführzweig (30) der Bewertungseinheit (26) nachfolgenden Anpassungseinheit (28) in Abhängigkeit vom Ergebnis des Vergleichs eine Schaltfrequenz des Wechselrichters (10) anpassbar ist.

**14.** Wechselrichtersystem (12) mit einem Wechselrichter (10), einem Netzfilter (20) und einem Rückführzweig (30) vom Netzfilter (20) zum Wechselrichter (10),
wobei der Rückführzweig (30) eine Dateneinheit (22) und/oder eine Anpassungseinheit (28) umfasst,
wobei mittels der Daten- oder Anpassungseinheit (22, 28) Werte an einem netzseitigen Anschlusspunkt (18) des Wechselrichters (10) bestimmbar sind,
wobei mittels der Daten- oder Anpassungseinheit (22, 28) auf Basis der bestimmten Werte ein geschätzter Verlauf einer Emissionskurve ermittelbar ist,
wobei mittels der Daten- oder Anpassungseinheit (22, 28) die geschätzte Emissionskurve mit einem vorgegebenen oder vorgebbaren Grenzspektrum vergleichbar ist und
wobei mittels der Daten- oder Anpassungseinheit (22, 28) in Abhängigkeit vom Ergebnis des Vergleichs eine Schaltfrequenz des Wechselrichters (10) anpassbar ist.

**15.** Wechselrichtersystem (12) nach Anspruch 13 mit Mitteln, insbesondere einem Computerprogramm nach Anspruch 12, zur Ausführung des Verfahrens gemäß einem oder mehreren der Ansprüche 2 bis 8 oder Wechselrichtersystem (12) nach Anspruch 14 mit Mitteln, insbesondere einem Computerprogramm nach Anspruch 12, zur Ausführung des Verfahrens gemäß einem oder mehreren der Ansprüche 9 bis 11.

## FIG 1

## FIG 2

## FIG 3

## FIG 4

FIG 5

FIG 6

FIG 7

FIG 8

FIG 9

Europäisches
Patentamt

European
Patent Office

Office européen
des brevets

# EUROPÄISCHER RECHERCHENBERICHT

Nummer der Anmeldung

EP 16 16 6228

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2009 049820 A1 (SIEMENS AG [DE]) 21. April 2011 (2011-04-21) | 1,2,13 | INV. H02M1/12 |
| Y | * Zusammenfassung * <br> * Abbildungen 5,6 * <br> * Absatz [0027] - Absatz [0033] * <br> ----- | 3-5,12, 15 | |
| X | US 2013/033907 A1 (ZHOU HUA [CA] ET AL) 7. Februar 2013 (2013-02-07) | 1,2,9, 11,14 | |
| Y | * Zusammenfassung * <br> * Abbildungen 1,4-13 * <br> * Absatz [0056] - Absatz [0080] * <br> ----- | 3-5,12, 15 | |
| X | DE 10 2008 018497 A1 (SIEMENS AG [DE]) 22. Oktober 2009 (2009-10-22) * Zusammenfassung * * Abbildungen 1-4 * * Absatz [0037] - Absatz [0045] * <br> ----- | 9,14 | |
| X | WO 2014/033331 A2 (WOODWARD KEMPEN GMBH [DE]) 6. März 2014 (2014-03-06) * das ganze Dokument * <br> ----- | 9,14 | |
| X | WO 2008/028794 A1 (SIEMENS AG [DE]; BAUER FRANZ [DE]; BRUNOTTE CHRISTOPH [DE]; KAHLEN KLE) 13. März 2008 (2008-03-13) * das ganze Dokument * <br> ----- | 9,14 | RECHERCHIERTE SACHGEBIETE (IPC) <br><br> H02M |

Der vorliegende Recherchenbericht wurde für alle Patentansprüche erstellt

| Recherchenort | Abschlußdatum der Recherche | Prüfer |
|---|---|---|
| Den Haag | 25. Januar 2017 | Lorenzo Barreiro, M |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
 Dokument

EPO FORM 1503 03.82 (P04C03)

Europäisches
Patentamt

European
Patent Office

Office européen
des brevets

Nummer der Anmeldung

EP 16 16 6228

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

## MANGELNDE EINHEITLICHKEIT
## DER ERFINDUNG
## ERGÄNZUNGSBLATT B

**Nummer der Anmeldung**

EP 16 16 6228

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-8, 13(vollständig); 12, 15(teilweise)

Verfahren zum Betrieb eines Wechselrichtersystems mit dem folgenden Schritte:
-Werte an einem Anschlusspunkt bestimmen
-Ein Betragsspektrum der Werte ermitteln
-Das Betragsspektrum mit einem Grenzspektrum verglichen
-In Abhängigkeit vom Ergebnis des Vergleichs eine Schaltfrequenz des Wechselrichters anpassen.
---

2. Ansprüche: 9-11, 14(vollständig); 12, 15(teilweise)

Verfahren zum Betrieb eines Wechselrichtersystems mit dem folgenden Schritte:
-Werte an einem Anschlusspunkt bestimmen
-Auf Basis der bestimmten Werte ein Verlauf einer Emissionskurve schätzen
-Die Emissionskurve mit einem Grenzspektrum verglichen
-In Abhängigkeit vom Ergebnis des Vergleichs eine Schaltfrequenz des Wechselrichters anpassen.
---

## ANHANG ZUM EUROPÄISCHEN RECHERCHENBERICHT
## ÜBER DIE EUROPÄISCHE PATENTANMELDUNG NR.

EP 16 16 6228

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2017

| Im Recherchenbericht angeführtes Patentdokument | Datum der Veröffentlichung | Mitglied(er) der Patentfamilie | Datum der Veröffentlichung |
|---|---|---|---|
| DE 102009049820 A1 | 21-04-2011 | KEINE | |
| US 2013033907 A1 | 07-02-2013 | KEINE | |
| DE 102008018497 A1 | 22-10-2009 | KEINE | |
| WO 2014033331 A2 | 06-03-2014 | CN 104718693 A<br>DE 102012108164 A1<br>EP 2893629 A2<br>WO 2014033331 A2 | 17-06-2015<br>06-03-2014<br>15-07-2015<br>06-03-2014 |
| WO 2008028794 A1 | 13-03-2008 | CN 101512882 A<br>DE 102006042384 A1<br>EP 2059998 A1<br>US 2010027302 A1<br>WO 2008028794 A1 | 19-08-2009<br>27-03-2008<br>20-05-2009<br>04-02-2010<br>13-03-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102009049820 A1